Europäisches Patentamt

European Patent Office

Office européen des brevets

(19)

(11) EP 1 058 402 B1

(12) **FASCICULE DE BREVET EUROPEEN**

(45) Date de publication et mention
de la délivrance du brevet:
**27.07.2005 Bulletin 2005/30**

(51) Int Cl.⁷: **H04B 1/707**

(21) Numéro de dépôt: **00401505.3**

(22) Date de dépôt: **29.05.2000**

(54) **Procédé de traitement d'un signal impulsionnel avec un seuil adaptatif et récepteur correspondant**

Verfahren zur Verarbeitung eines Impulssignals mit einer adaptiven Schwelle und entsprechender Empfänger

Method for processing an impulse signal with an adaptive threshold and corresponding receiver

(84) Etats contractants désignés:
**DE GB IT**

(30) Priorité: **02.06.1999 FR 9906947**

(43) Date de publication de la demande:
**06.12.2000 Bulletin 2000/49**

(73) Titulaire: **COMMISSARIAT A L'ENERGIE ATOMIQUE**
**75752 Paris Cédex 15 (FR)**

(72) Inventeurs:
• **Lattard, Didier**
**38680 Rencurel (FR)**

• **Lequepeys, Jean-René**
**38600 Fontaine (FR)**
• **Varreau, Didier**
**38450 Vif (FR)**
• **Bouvier des Noes, Mathieu**
**38000 Grenoble (FR)**

(74) Mandataire: **Poulin, Gérard et al**
**Société BREVATOME**
**3, rue du Docteur Lancereaux**
**75008 Paris (FR)**

(56) Documents cités:
EP-A- 0 615 355          FR-A- 2 751 499
US-A- 5 598 429

## Description

### Domaine technique

La présente invention a pour objet un procédé de traitement d'une réponse impulsionnelle avec seuil adaptatif et un récepteur correspondant. Elle trouve une application générale dans le traitement du signal, chaque fois qu'un signal se présente sous la forme d'impulsions accompagnées de répliques superposées à du bruit. Ce peut être le cas en sismologie, en détection radar ou sonar, ou encore dans le cas des radiocommunications numériques à étalement de spectre par séquence directe (ESSD ou "DSSS" en anglais pour "Direct Sequence Spread Spectrum").

### Etat de la technique antérieure

L'invention sera plus spécialement décrite dans le cadre des radiocommunications numériques à étalement de spectre, bien que sa portée soit plus large.

La technique d'étalement de spectre par séquence directe consiste, schématiquement, à multiplier un symbole d'information (par exemple un ou plusieurs élément(s) binaire(s)) par un code pseudo-aléatoire composé d'une séquence d'éléments appelés "chips". Cette opération a pour effet d'étaler le spectre du signal. En réception, le signal reçu est traité par corrélation avec un code pseudo-aléatoire identique à celui de l'émission, ce qui a pour effet de réduire ("désétaler") le spectre. Le signal désétalé est ensuite traité pour retrouver le symbole d'information.

La technique de modulation à étalement de spectre par séquence directe est largement décrite dans la littérature spécialisée. On peut citer les ouvrages suivants :

- "CDMA Principles of Spread Spectrum Communication" de Andrew J. VITERBI, Addison Wesley Wireless Communications Series,
- "Spread Spectrum Systems" de Robert C. DIXON, John WILEY and Sons,
- "Spread Spectrum Communications" de Marvin K. SIMON, Jim K. OMURA, Robert A. SCHOLTZ et Barry K. LEVITT, Computer Science Press, 1983, vol. I.

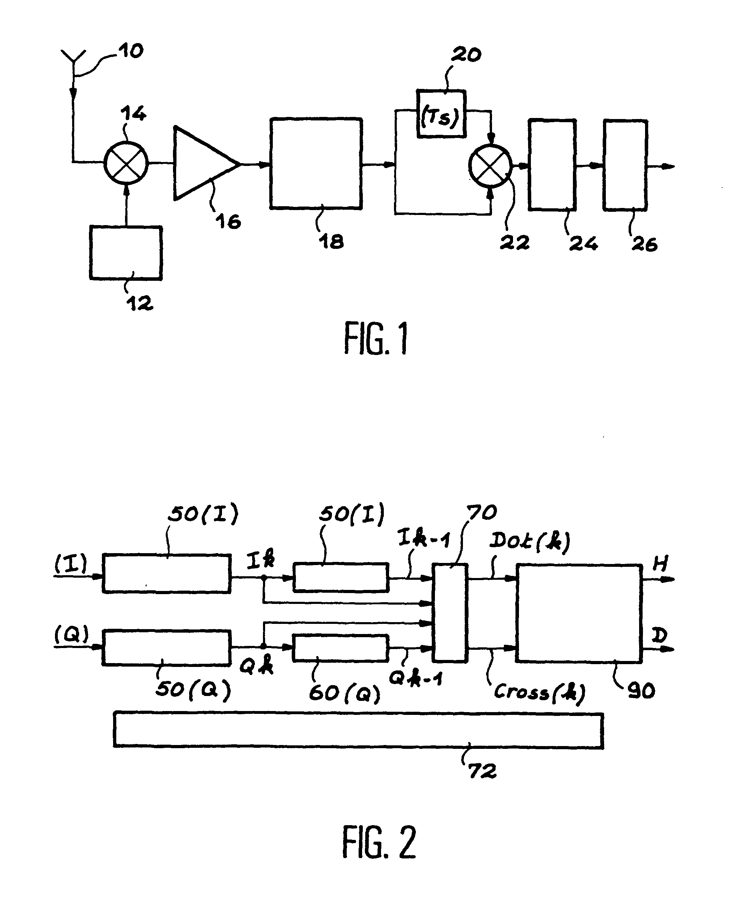

La figure 1 annexée donne le schéma synoptique simplifié d'un récepteur à étalement de spectre dans le cas où l'on a utilisé à l'émission une modulation de type différentiel.

Sur cette figure, on voit un récepteur comprenant une antenne 10, un oscillateur local 12, un multiplieur 14, un amplificateur 16, un filtre adapté 18, une ligne à retard 20, un multiplieur 22, un intégrateur 24 et un circuit de décision 26.

Le principe de fonctionnement de ce récepteur est le suivant. Le filtre adapté 18 réalise l'opération de corrélation entre le signal reçu et la séquence d'étalement utilisée. Le principe de la modulation différentielle de phase, qui est parfois choisi à l'émission, entraîne que l'information est portée par la différence de phase entre les signaux à la sortie du filtre adapté 18 et à la sortie de la ligne à retard 20. Cette information est restituée par le multiplieur 22.

A chaque trajet de propagation correspond un pic de corrélation à la sortie du multiplieur 22. Le rôle de l'intégrateur 24 consiste à prendre en compte les informations apportées par chacun des trajets de propagation. Les trajets de propagation étant, dans un environnement à trajets multiples, statistiquement indépendants, on réalise donc, avec cette technique particulière de réception, un traitement de diversité, dont l'ordre peut être relevé lorsque la réponse impulsionnelle est complexe. Le circuit de décision 26 permet de reconstruire la donnée émise et, en outre, de régénérer un signal d'horloge utilisé pour commander les différents circuits.

Le document FR-A-2 742 014 décrit un mode de réalisation numérique de ce récepteur, qui est illustré sur la figure 2. Ce récepteur comprend deux voies analogues, l'une pour traiter la partie I du signal en phase avec la porteuse et l'autre pour traiter la partie Q en quadrature avec cette même porteuse.

La voie I comprend des moyens de filtrage 50 (I) adaptés à la séquence pseudo-aléatoire utilisée à l'émission ; ces premiers moyens délivrent des échantillons $I_k$. La voie I comprend encore des moyens de retard 60(I), d'une durée égale à la période Ts des symboles ; ces moyens délivrent des échantillons $I_{k-1}$.

La voie Q comprend elle-aussi des moyens de filtrage 50(Q) adaptés à la séquence pseudo-aléatoire, et délivrent des échantillons $Q_k$. La voie Q comprend en outre des moyens de retard 60(Q) d'une durée Ts et délivrant des échantillons $Q_{k-1}$.

Le multiplieur 70 calcule des combinaisons de produits de ces échantillons et notamment un signal noté par la suite Dot(k) qui est égal à $I_k I_{k-1}+Q_k Q_{k-1}$ et un signal noté Cross(k) égal à $Q_k I_{k-1}-I_k Q_{k-1}$. Les signaux Dot(k) et Cross(k) permettent de calculer le produit d'un échantillon $S_k$ obtenu à l'instant k par l'échantillon conjugué de $S_{k-1}$ obtenu à l'instant t-Ts, où Ts est la durée des symboles. Ce calcul est propre à la modulation différentielle.

Le circuit de la figure 2 comprend encore un moyen de programmation 72. Un circuit de décision 90 délivre finalement un signal d'horloge H et le symbole reconstitué D (sur un ou plusieurs bits).

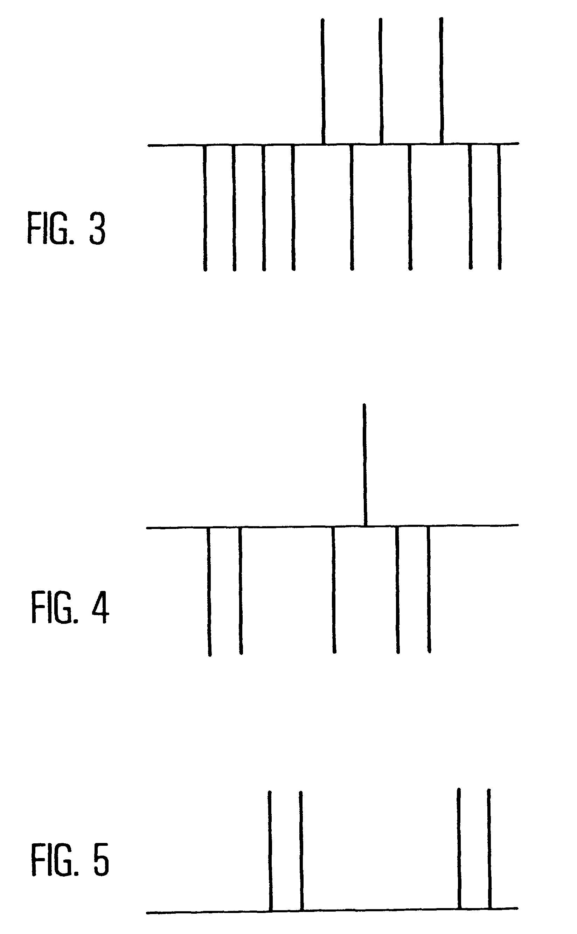

A titre explicatif, la figure 3 annexée montre l'allure d'un signal Dot obtenu par simulation, dans le cas où il n'existe qu'un seul trajet de propagation entre l'émetteur et le récepteur. Les pics représentés sont tantôt positifs, tantôt négatifs, selon la valeur de l'information binaire transmise. L'intervalle entre deux pics consécutifs correspond à la durée Ts d'un symbole.

Dans le cas d'une modulation de phase à 4 états, dite DQPSK (Q pour "Quaternary"), les deux signaux Dot et Cross doivent être examinés simultanément pour retrouver les données émises. Les figures 4 et 5 donnent respectivement l'allure des signaux Dot et Cross obtenus toujours par simulation dans le cas d'un seul trajet.

Dans le cas de plusieurs trajets, les pics illustrés sur les figures 3 à 5 seraient doubles, triples, quadruples, etc... pour chaque symbole, le nombre de pics détectés étant égal au nombre de trajets empruntés par l'onde radioélectrique entre émetteur et récepteur.

Un simple intégrateur, comme l'intégrateur 24 de la figure 1, intégré dans le circuit 90 de la figure 2, intègre tous les signaux présents, c'est-à-dire à la fois les pics (correspondant à une information vraie), et le bruit (ne correspondant à aucune information). Le rapport signal sur bruit est donc faible.

Le document FR-A-2 757 330 propose une solution pour améliorer ce rapport signal sur bruit. Elle consiste d'abord à calculer la somme des carrés des signaux Dot(k) et Cross(k), puis à extraire la racine carrée de cette somme, quantité qui reflète la distribution énergétique des différents trajets de propagation, chaque pic ayant pour amplitude l'énergie véhiculée par le trajet correspondant. On mesure donc la quantité E(k) définie par :

$$E(k) = [Dot\ (k)^2 + Cross(k)^2]^{1/2}.$$

On effectue ensuite une opération de moyenne de l'énergie E(k) sur quelques symboles, c'est-à-dire sur quelques valeurs du rang k. Le nombre symboles pris en compte pour cette estimation de la moyenne doit correspondre à une durée inférieure au temps de cohérence du canal, c'est-à-dire au temps au-delà duquel deux ondes distinctes de même origine n'interfèrent plus.

A l'aide de cette moyenne, notée $E^{moy}$, on pondère les signaux instantanés Dot(k) et Cross(k), par exemple par multiplication de Dot(k) et Cross(k) par $E^{moy}$. On obtient ainsi deux nouveaux signaux dits pondérés, soit $Dot(k)^{moy}$ et $Cross(k)^{moy}$. C'est sur ces signaux pondérés, reflétant la moyenne de l'énergie sur plusieurs symboles, que l'on effectue ensuite le traitement d'intégration sur une période Ts du symbole, puis la régénération de l'horloge et la récupération des données.

Si cette technique connue donne satisfaction à certains égards, elle présente tout de même l'inconvénient de prendre en compte le bruit, aussi faible soit-il. Par ailleurs, l'intégration effectuée sur les impulsions empêche de déterminer le nombre de trajets présents.

La présente invention a justement pour but de remédier à ces inconvénients en permettant d'écarter le bruit et de préserver l'identité des trajets.

Le document US 5 598 429 décrit un récepteur utilisant un seuil adaptif basé sur le bruit moyen et le CAG moyen.

**Exposé de l'invention**

A cette fin, l'invention propose de déterminer un seuil à partir duquel le signal sera pris en compte pour un traitement ultérieur. L'homme du métier serait conduit à choisir un seuil fixe, déterminé une fois pour toutes. Mais la valeur de ce seuil serait souvent inappropriée. En effet, selon les conditions de transmission, l'amplitude du pic principal peut subir de grandes variations, et il en va de même pour le niveau de bruit moyen. Par exemple, dans le domaine du transport ferroviaire, les communications par étalement de spectre sont utilisées entre la tête et la queue du train pour transmettre des signaux de commande et de contrôle. Dans une zone rurale et dans une courbe relativement prononcée, émetteur et récepteur sont en vue directe et il existe donc un trajet unique de forte amplitude. Cependant, dans un tunnel présentant une courbe, les seuls trajets existants correspondent à des réflexions sur les parois du tunnel ; ils sont multiples et de faible amplitude.

Par ailleurs, bien que les communications par étalement de spectre soient relativement robustes aux brouilleurs (émetteurs fonctionnant sur les mêmes fréquences), ceux-ci induisent une diminution des pics et une augmentation du bruit. Pour reprendre l'exemple du train, celui-ci peut rouler dans des milieux ruraux ou urbains, dans des tunnels, dans des zones brouillées ou croiser d'autres trains : ces modifications brutales d'environnement entraînent de grandes variations de réponse impulsionnelle.

Pour toutes ces raisons, un seuil fixe ne conviendrait pas. L'invention propose alors de déterminer un seuil qui s'adapte au signal et au bruit. En d'autres termes, le seuil est adaptatif. L'adaptation s'effectue à travers une mesure du maximum atteint par le signal et par la valeur moyenne du bruit.

De façon plus précise, la présente invention a pour objet un procédé de traitement d'une réponse impulsionnelle constituée de plusieurs impulsions successives superposées à du bruit, caractérisé en ce que, dans un traitement préalable, on détermine la valeur du maximum des impulsions dans un intervalle de temps déterminé et la valeur du bruit moyen dans cet intervalle, on calcule un seuil adaptatif égal à une fonction du maximum et du bruit moyen, on compare les impulsions reçues à ce seuil et l'on ne prend en compte que les impulsions dépassant ce seuil pour effectuer le traitement du signal.

De préférence, le seuil adaptatif est pris égal à la quantité $B+\alpha(M-B)$ où M est la valeur du maximum des impulsions, B la valeur du bruit moyen et $\alpha$ est un coefficient réglable compris entre 0 et 1. On obtient ainsi un seuil qui croît linéairement avec le bruit moyen et avec l'écart entre le maximum du signal et le bruit.

Ce procédé s'applique de manière avantageuse dans le cas où le signal à traiter est un signal correspondant à des symboles d'information transmis par étalement de spectre, ledit intervalle étant alors égal à la durée de chaque symbole.

L'invention a également pour objet un récepteur pour radiocommunications à étalement de spectre par séquence directe, pour la mise en oeuvre du procédé qui vient d'être défini.

**Brève description des dessins**

- la figure 1, déjà décrite, illustre un récepteur connu pour transmission différentielle à étalement de spectre par séquence directe ;
- la figure 2, déjà décrite, illustre un circuit numérique connu ;
- la figure 3, déjà décrite, montre l'allure d'un signal Dot dans le cas d'une modulation différentielle à 2 états de phase (DPSK) ;
- la figure 4, déjà décrite, montre l'allure d'un signal Dot dans le cas d'une modulation différentielle à 4 états de phase (DQPSK) ;
- la figure 5, déjà décrite, montre l'allure d'un signal Cross dans le cas d'une modulation différentielle à 4 états de phase (DQPSK) ;
- la figure 6 montre des moyens de calcul du seuil adaptatif selon l'invention ;
- la figure 7 montre une partie d'un récepteur à étalement de spectre utilisant un seuil adaptatif ;
- la figure 8 montre un exemple de seuil adaptatif pour quatre valeurs du coefficient $\alpha$.

**Description de modes particuliers de réalisation**

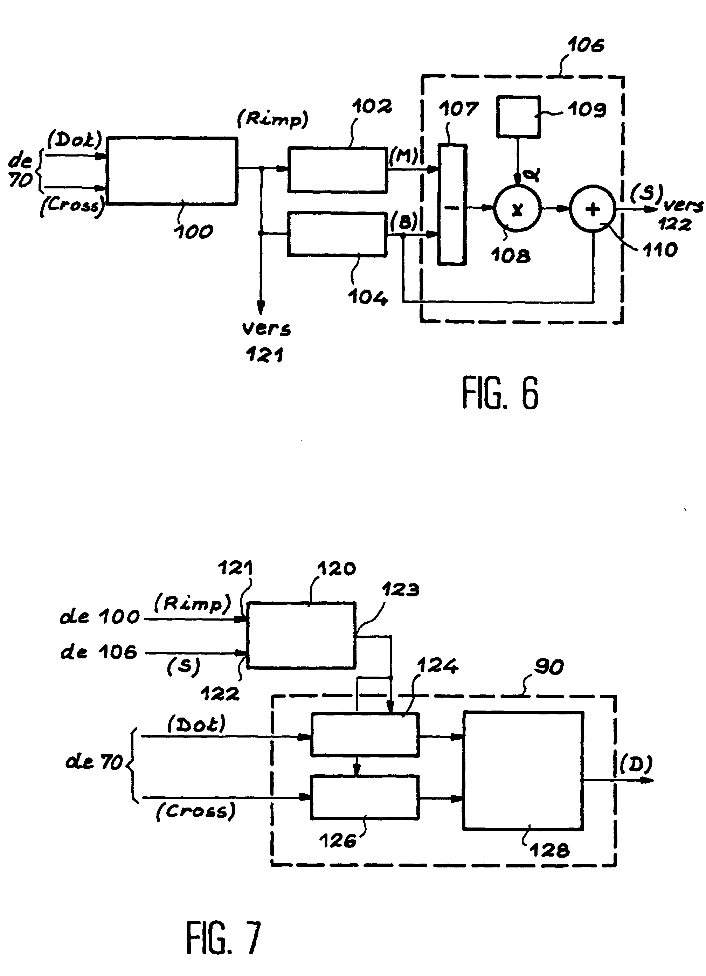

La figure 6 illustre un mode de réalisation de moyens aptes à calculer un seuil adaptatif. Ce mode de réalisation correspond à un récepteur tel que décrit dans le document FR-A-2 757 330 déjà cité, où l'on dispose de signaux Dot et Cross. Le circuit représenté comprend des moyens d'estimation 100 de la réponse impulsionnelle (Rimp), ces moyens recevant les signaux Dot et Cross. Il comprend en outre des moyens 102 de calcul du maximum M de la réponse impulsionnelle Rimp dans un intervalle de temps égal à une période de symbole Ts. Ces moyens peuvent comprendre un comparateur et un registre pour stocker la valeur maximum, ce calcul étant effectué une fois par symbole. Le circuit représenté comprend encore des moyens 104 de calcul du bruit moyen B dans l'intervalle Ts. Le circuit de la figure 6 comprend enfin un circuit 106 de calcul d'un seuil adaptatif S fonction de M et de B. Dans la variante illustrée, ce circuit comprend un soustracteur 107 recevant M et B, un multiplieur 108 par un coefficient $\alpha$ fixé par un moyen réglable 109, ce soustracteur délivrant donc la quantité $\alpha(M-B)$ et un additionneur 110 délivrant la quantité $B+\alpha(M-B)$ constituant le seuil S.

On pourrait naturellement calculer des seuils différents en utilisant des quantités $\beta B+\mu M$, ou même des fonctions non linéaires de B et de M.

La figure 7 montre les moyens à ajouter à un récepteur tel que celui de la figure 2, pour mettre en oeuvre l'invention. Ces moyens sont constitués par un comparateur 120 avec une première entrée 121 reliée aux moyens d'estimation de la réponse impulsionnelle 100 de la figure 6 et recevant donc le signal Rimp, et une seconde entrée 122 reliée au circuit 106 de calcul du seuil adaptatif et recevant la valeur du seuil S. Le comparateur 120 possède une sortie 123 qui commande les moyens d'accumulation 124, 126 disposés dans le circuit général 90 (cf. figure 2). Ces accumulateurs reçoivent respectivement les signaux Dot et Cross (venant des moyens 70 de la figure 2) et intègrent l'énergie véhiculée par l'ensemble des trajets. Si la réponse impulsionnelle Rimp excède le seuil S, alors les signaux Dot et Cross sont additionnés dans leurs accumulateurs respectifs, sinon le contenu de l'accumulateur n'est pas modifié (D).

En fin d'accumulation, le circuit 128 restitue le bit unique (en modulation DPSK) ou les deux bits (en DQPSK) du symbole reçu.

A titre explicatif, il peut être indiqué que :

- pour calculer le bruit moyen, on peut utiliser un accumulateur qui somme pendant 1024 échantillons le signal de réponse impulsionnelle. En fin d'accumulation, le bruit moyen correspond à la valeur de l'accumulateur divisée par 1024 ; cette estimation du bruit est réactualisée tous les 1024 échantillons ;
- les signaux issus de la démodulation différentielle (Dot et Cross) peuvent être signés et codés en complément à 2 sur 11 bits ;
- le signal d'estimation de la réponse impulsionnelle (Rimp) est positif et peut être codé sur 10 bits ;
- le paramètre $\alpha$, introduit dans le circuit en phase de configuration, peut être codé sur 5 bits ; l'intervalle de définition du seuil (M-B) est donc divisé en 32 sous-intervalles directement adressables.

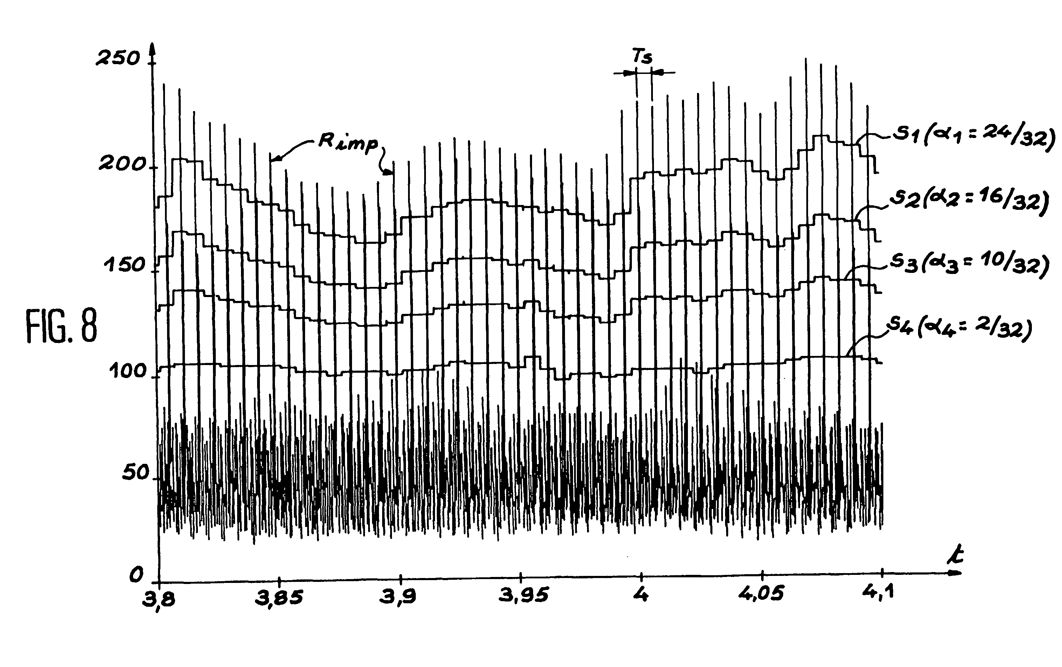

Pour finir, la figure 8 montre quatre exemples de seuil adaptatif $S_1$, $S_2$, $S_3$, $S_4$ correspondant à quatre valeurs différentes du coefficient $\alpha$, respectivement $\alpha_1=24/32$, $\alpha_2=16/32$, $\alpha_3=10/32$, $\alpha_4=2/32$ (la valeur 32 vient de ce que le coefficient $\alpha$ est codé sur 5 bits). La figure 8 montre également la réponse impulsionnelle, formée par une suite de traits verticaux séparés d'un intervalle de temps Ts égal à la durée d'un symbole. La figure 8 montre également le bruit. On voit bien, sur cette figure, comment le seuil s'adapte au signal reçu et au bruit. Lorsque le coefficient $\alpha$ est proche de l'unité ($\alpha=\alpha_1=24/32$), le seuil est proche du maximum M des pics de sorte qu'on ne retiendra en général, pour le traitement de signal ultérieur, qu'un seul trajet. Quand $\alpha$ est faible ($\alpha=\alpha_4=2/32$), le seuil est proche du bruit, et les trajets multiples peuvent être pris en compte. Les moyens 109 de la figure 6 permettent d'ajuster la valeur α à la valeur la mieux appropriée selon les buts visés.

## Revendications

**1.** Procédé de traitement d'une réponse impulsionnelle constituée de plusieurs impulsions successives superposées à du bruit, **caractérisé en ce que**, dans un traitement préalable, on détermine la valeur (M) du maximum des impulsions dans un intervalle de temps déterminé et la valeur (B) du bruit moyen dans cet intervalle, on calcule un seuil adaptatif (S) égal à une fonction dudit maximum (B) et dudit bruit moyen (M), on compare les impulsions reçues à ce seuil et l'on ne prend en compte que les impulsions dépassant ce seuil pour effectuer le traitement du signal.

**2.** Procédé selon la revendication 1, dans lequel le seuil adaptatif est pris égal à la quantité B+α(M-B) où M est la valeur du maximum, B la valeur du bruit moyen et α est un coefficient réglable compris entre 0 et 1.

**3.** Procédé selon la revendication 1, dans lequel le signal à traiter est un signal correspondant à des symboles d'information transmis par étalement de spectre, ledit intervalle étant égal à la durée (Ts) de chaque symbole.

**4.** Procédé selon la revendication 3, dans lequel ledit traitement du signal consiste en une accumulation d'impulsions suivie d'une prise de décision, l'accumulation n'étant effective que pour les impulsions dépassant le seuil.

**5.** Récepteur pour radiocommunications à étalement de spectre par séquence directe, pour la mise en oeuvre du procédé selon la revendication 3, ce récepteur comprenant des moyens de corrélation (50(I), 50(Q)) aptes à délivrer des pics de corrélation, des moyens (70) de traitement de ces pics de corrélation pour délivrer des signaux (Dot, Cross) permettant une démodulation du signal, des moyens d'accumulation (124, 126) et de décision (128) aptes à restituer un symbole d'information (D), ce récepteur étant **caractérisé en ce qu'**il comprend en outre, des moyens (100) d'estimation de la réponse impulsionnelle, des moyens (102) de calcul du maximum (M) de la réponse impulsionnelle (Rimp) dans un intervalle de temps égal à une période (Ts) des symboles, des moyens (104) de calcul du bruit moyen dans cet intervalle (Ts), un circuit (106) de calcul d'un seuil adaptatif (S) fonction du maximum (M) et du bruit moyen (B), un comparateur (120) avec une première entrée (121) reliée aux moyens d'estimation de la réponse impulsionnelle (Rimp) et une seconde entrée (122) reliée au circuit (106) de calcul du seuil adaptatif (S), ce comparateur ayant une sortie (123) reliée aux moyens d'accumulation (124, 126), pour le contrôle.

**6.** Récepteur selon la revendication 5, dans lequel le circuit de calcul (106) du seuil adaptatif (S) comprend des moyens (107, 108, 110) pour calculer la quantité B+α(M-B) où M est la valeur maximum de la réponse impulsionnelle, B la valeur du bruit moyen et α un coefficient réglable compris entre 0 et 1.

## Claims

**1.** Method of processing a pulse response made up of several successive pulses overwritten with noise, **characterized in that**, in a preliminary process, the value (M) of the maximum of the pulses within a defined period of time and the value (B) of the mean noise within this interval are determined, an adaptive threshold (S) equal to a function of said maximum (M) and of said mean noise (B) is calculated, the pulses received are compared with this threshold and only those pulses that exceed this threshold are taken into account in order to carry out the processing of the signal.

**2.** Method according to claim 1, in which the adaptive threshold is taken to be equal to the quantity B + α (M - B) where M is the value of the maximum, B the value of the mean noise and α is a coefficient adjustable between 0 and 1.

**3.** Method according to claim 1, in which the signal to be processed is a signal corresponding to data symbols transmitted by spread spectrum, said interval being equal to the duration (Ts) of each symbol.

**4.** Method according to claim 3, in which said processing of the signal consists of an accumulation of pulses followed by the taking of a decision, the accumulation only being effective for the pulses that exceed the threshold.

**5.** Receiver for direct sequence spread spectrum radio-communications, for the implementation of the method according to claim 3, this receiver comprising correlation means (50(I), 50(Q)) capable of supplying correlation peaks, means (70) of processing these correlation peaks to supply signals (Dot, Cross) that permit demodulation of the signals, means (124, 126) of accumulation and decision means (128) capable of restoring a symbol of data (D), this receiver being **characterized in that** it additionally comprises means (100) of estimating the pulse response, means (102) of calculating the maximum (M) of the pulse response (Rimp) within a time interval equal to a period (Ts) for the symbols, means (104) of calculating the mean noise in this interval (Ts), a circuit (106) for calculating an adaptive threshold (S), a function of the maximum (M) and of the mean noise (B), a comparator (120) with a first input (121) connected to the means of estimating the pulse response (Rimp) and a second input (122) connected to the circuit (106) for calculating the adaptive threshold (S), this comparator having an output (123) connected to the accumulation means (124, 126) for the control.

6. Receiver according to claim 5, in which the circuit (106) for calculating the adaptive threshold (S) comprises means (107, 108, 110) to calculate the quantity B + $\alpha$(M - B) where M is the maximum, B the value of the mean noise and $\alpha$ is a coefficient adjustable between 0 and 1.

**Patentansprüche**

1. Verfahren zur Verarbeitung einer Impulsantwort, gebildet durch mehrere aufeinanderfolgende, einem Geräusch überlagerte Impulse,
   **dadurch gekennzeichnet, dass** man in einer vorausgehenden Verarbeitung den Wert (M) des Maximums der Impulse in einem bestimmten Zeitintervall und den Wert (B) des mittleren Geräusches in diesem Intervall ermittelt, man eine adaptive Schwelle (S) gleich einer Funktion des genannten Maximums (B) und des genannten mittleren Geräusches (M) berechnet, man die empfangenen Impulse mit dieser Schwelle vergleicht und man zur Verarbeitung des Signals nur die Impulse berücksichtigt, die diese Schwelle überschreiten.

2. Verfahren nach Anspruch 1, bei dem die adaptive Schwelle gleich der Größe B+$\alpha$(M-B) ist, wo M der Wert des Maximums ist, B der Wert des mittleren Geräusches ist und $\alpha$ ein einstellbarer, zwischen 0 und 1 enthaltener Koeffizient ist.

3. Verfahren nach Anspruch 1, bei dem das zu verarbeitende Signal ein Signal ist, das Symbolen der mittels Spektrumsspreizung bzw. Spreizspektrum übertragenen Information entspricht, wobei das genannte Intervall gleich der Dauer (Ts) jedes Symbols ist.

4. Verfahren nach Anspruch 3, bei dem die genannte Verarbeitung des Signals aus einer Akkumulation von Impulsen besteht, gefolgt von einer Entscheidungsoperation, wobei die Akkumulation nur für die die Schwelle überschreitenden Impulse wirksam ist.

5. Empfänger für Direktsequenzspreizspektrums-Funkverbindungen zur Anwendung des Verfahrens nach Anspruch 3, mit Korrelationseinrichtungen (50 (I), 50(Q), fähig Korrelationspeaks zu liefern, Einrichtungen (70) zur Verarbeitung dieser Korrelationspeaks, um Signale (Dot, Cross) zu liefern, die eine Demodulation des Signals ermöglichen, Akkumulationseinrichtungen (124, 126) und Entscheidungseinrichtungen (128), fähig ein Informationssignal (D) wiederzugeben, wobei dieser Empfänger **dadurch gekennzeichnet ist, dass** er außerdem Bewertungseinrichtungen (100) der Impulsantwort, Berechnungseinrichtungen (102) des Maximums (M) der Impulsantwort (Rimp) in einem Zeitintervall gleich einer Periode (Ts) der Symbole, Berechnungseinrichtungen (104) des mittleren Geräusches in diesem Intervall (Ts), eine Berechnungsschaltung (106) einer adaptiven Schwelle (S) in Abhängigkeit von dem Maximum (M) und dem mittleren Geräusch (B) sowie einen Komparator (120) mit einem ersten, mit der Berechnungsschaltung (106) der adaptiven Schwelle (S) verbundenen Eingang (121) und einem zweiten, mit der Berechnungsschaltung (106) der adaptiven Schwelle (S) verbundenen Eingang (12) umfasst, wobei dieser Komparator zur Steuerung einen mit den Akkumulationseinrichtungen (124, 126) verbundenen Ausgang (123) hat.

6. Empfänger nach Anspruch 5, bei dem die Berechnungsschaltung der adaptiven Schwelle (S) Einrichtungen (107, 108, 110) umfasst, um die Größe B+$\alpha$(M-B) zu berechnen, wo M der Maximalwert der Impulsantwort ist, B der Wert des mittleren Geräusches ist und $\alpha$ ein einstellbarer, zwischen 0 und 1 enthaltener Koeffizient ist.

FIG. 1

FIG. 2

FIG. 3

FIG. 4

FIG. 5

FIG. 6

FIG. 7

FIG. 8